# EUROPEAN PATENT SPECIFICATION

(11) **EP 1 108 585 B1**
(45) Date of publication and mention of the grant of the patent: **07.06.2006**
(21) Application number: 00125125.5
(22) Date of filing: 17.11.2000
(51) Int. Cl.: B60K 11/04

(54) **Radiator arranging construction for a two-wheeled vehicle**
Kühleranordung für ein Motorrad
Disposition de radiateur pour véhicule à deux roues

(30) Priority: 17.12.1999 JP 35996599
(43) Date of publication of application: 20.06.2001
(73) Proprietor: HONDA GIKEN KOGYO KABUSHIKI KAISHA, Minato-ku, Tokyo (JP)
(72) Inventor: Kusano, Takuhei, Wako-shi, Saitama (JP); Minami, Kazutaka, Wako-shi, Saitama (JP); Kuramitsu, Tomofumi, Wako-shi, Saitama (JP)
(74) Representative: Liska, Horst

(56) References cited:
- EP-A- 0 756 110

## Description

The present invention relates to an improved technique of a two-wheeled vehicle provided with a radiator.

In a conventional two-wheeled vehicle, an air cooling engine or a water cooling engine is mainly mounted, and in the water cooling engine, an arrangement of the radiator is the point. With regard to the arrangement of the radiator, for example, Japanese Patent Application Laid-Open No. Hei. 9-11957 Publication "A radiator arranging construction for a scooter type two-wheeled vehicle" (hereinafter referred to as "prior art") has been known.

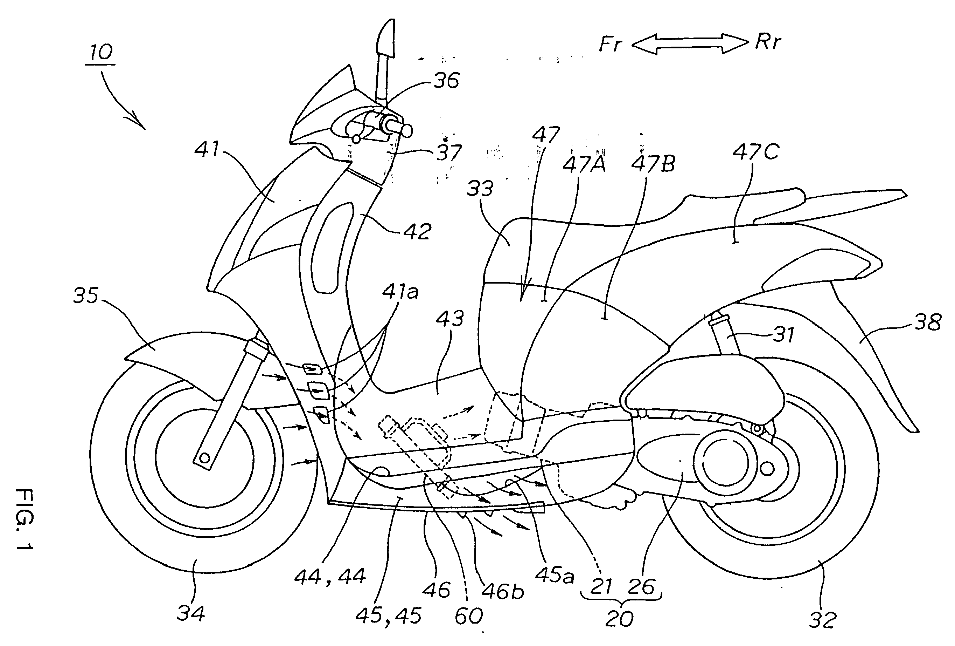

This technique relates to a scooter type two-wheeled vehicle 1 in which in Figs. 1 and 27 of the aforementioned Publication, a main frame 11 is obliquely downwardly extended backward from a head pipe 5 (A numeral is cited from those described in the Publication, and the same is true.), a pair of left and right side frames 12, 12 are extended backward from the rear end of the main frame 11, whereas a pair of left and right down tubes 13, 13 are lowered from the head pipe 5, and a body frame 2 of a cradle type in which the rear end thereof is extended upward and connected to the left and right side frames 12, 12.

Further, according to Fig. 1 of the Publication, the side frames 12, 12 are covered by a center tunnel 8a (corresponding to a tunnel cover), and a longitudinally placed radiator 116 is arranged frontwardly of a space covered by the center tunnel 8a.

In the above-described conventional technique, the height of the side frames 12, 12 cannot be determined while adjusting to the size of the radiator 116 in terms of restriction of design of the scooter type two-wheeled vehicle 1. Since the height of the center tunnel 8a is determined adjusting to the height of the side frames 12, 12, the size of the space within the center tunnel 8a is also limited. There is a limit in improving the cooling ability of the radiator 116 arranged in the limited space, and there is a room for improvement.

Further, an engine body 50 arranged at the rear of the radiator 116 is a forwardly inclined type engine in which a cylinder shaft is inclined with respect to a horizontal line, and a cylinder head is raised upward. Because of this, a clearance between the upper end of the cylinder head and the center tunnel 8a is small. If the clearance is small, air quantity of cooling air is limited. That is, there is a limit to cool accessories for the engine arranged at the rear of the vehicle efficiently by cooling waste air.

EP-A-07 56 110 discloses a radiator arranging construction in accordance with the preamble of claim 1. There, the radiator is arranged in front of the horizontal tube between front and rear down tubes.

It is therefore an object of the present invention to provide a technique capable of easily enhancing the cooling ability of a radiator arranged in a limited space within a tunnel cover, and capable of cooling accessories for the engine more efficiently by cooling waste air after having passed the radiator.

For achieving the aforesaid object, according to claim 1, there is provided a radiator arranging construction in a two-wheeled vehicle in which a down tube is lowered from a head pipe, a horizontal tube is extended backward from the middle of the down tube, the horizontal tube is covered by a tunnel cover having a substantially inversed-U letter section and front and rear of which are opened, and a radiator and an engine are arranged in the tunnel cover in said order, wherein said radiator is inclined at a predetermined angle to a vertical line when said two-wheeled vehicle is viewed from the side thereof, and is positioned under said horizontal tube, and that said radiator is arranged behind the position where the horizontal tube extends from the down tube and within a part of the tunnel cover having the substantially inversed-U letter section and extending along the horizontal tube, such that a part of the air leaving the radiator is directly fed into a clearance between the upper side of the engine and the tunnel cover.

The radiator, in a state of being inclined at a predetermined angle to a vertical line, is arranged within the tunnel cover. A large radiator can be arranged in the limited space within the tunnel cover.

In the forwardly inclined type engine, a clearance between the upper end of the cylinder head and the tunnel cover is small. Therefore, the radiator is forwardly inclined to thereby generate a flow of air rearward and upward so as to preferably cool even the upper end of the cylinder head.

In claim 1, since when the two-wheeled vehicle is viewed from the side, the radiator, in a state of being inclined at a predetermined angle with respect to a vertical line, is arranged within the tunnel cover, a large radiator can be arranged within a limited space in the tunnel cover. As a result, a cooling area of the radiator can be made large to enhance the cooling ability.

When the engine is a forwardly inclined type engine in which the cylinder shaft is inclined with respect to a horizontal line and the cylinder is raised, the radiator is arranged to be inclined forwardly with the upper part projected forward.

In the forwardly inclined type engine, a clearance between the upper end of the cylinder head and the tunnel cover is small. If the radiator is arranged to be inclined forward to move cooling waste air after having passed through the radiator rearward and upward, thus making it possible to secure a good flow of air despite the small clearance. Accordingly, accessories for the engine arranged at the rear of the vehicle can be cooled efficiently, and the upper end of the cylinder head can be also cooled preferably.

The embodiment of the present invention will be described hereinafter with reference to the accompanying drawings.
Fig. 1 is a side view of a two-wheeled vehicle according to the present invention.
Fig. 2 is a perspective view of a body frame according to the present invention.
Fig. 3 is a side sectional view of a front part of the body frame, an engine, and surroundings of a tunnel cover according to the present invention.
Fig. 4 is a sectional view taken on line 4-4 of Fig. 3.
Fig. 5 is a plan sectional view a front part of the body frame, an engine, a tunnel cover, and surroundings of a radiator according to the present invention.

Note that "front", "rear", "left", "right", "upper" and "lower" are in accordance with the directions as viewed from a driver. Further, the drawings are to be seen in accordance with the direction on the arrows.

Fig. 1 is a side view of a two-wheeled vehicle according to the present invention.

A two-wheeled vehicle 10 is a scooter type two-wheeled vehicle in which a swing type power unit 20 is mounted at the rear of a body frame not shown, the power unit is suspended on the upper part at the rear of the body frame through a rear suspension 31, and a rear wheel 32 is mounted at the rear of the power unit 20.

The power unit 20 comprises a combined construction unit of an engine 21 in the front and a transmission mechanism 26 in the rear.

Further, the two-wheeled vehicle 10 comprises a front cover 41 for covering the upper part of the front part of the body frame, an inner cover 42 for covering the rear part of the front cover 41, a tunnel cover 43 for covering the central part of the body frame, left and right step floors 44, 44 joined to the tunnel cover 43, left and right floor skirts 45, 45 extended downward from the outer edges of the step floors 44, 44, an under cover 46 extended over between the lower edges of the floor skirts 45, 45 to cover the lower surface of the body frame, and a seat lower cover 47 for covering the body frame under a.seat 33.

The front cover 41 is bored in the side with a plurality of air ducts 41a, and travel air is taken into the front of the tunnel cover 43 from the air ducts. The travel air termed herein is cooling air introduced from the forward of the vehicle when the vehicle travels.

The seat lower cover 47 comprises a center cover 47A for covering a housing box not shown at the rear of the tunnel cover 43, a side cover 47B for covering both sides at the rear of the body frame, and a rear cover 47C for covering the rear part of the body frame.

In the drawings, reference numeral 34 designates a front wheel; 35 a front fender; 36 a handle; 37 a handle cover; and 38 a rear fender.

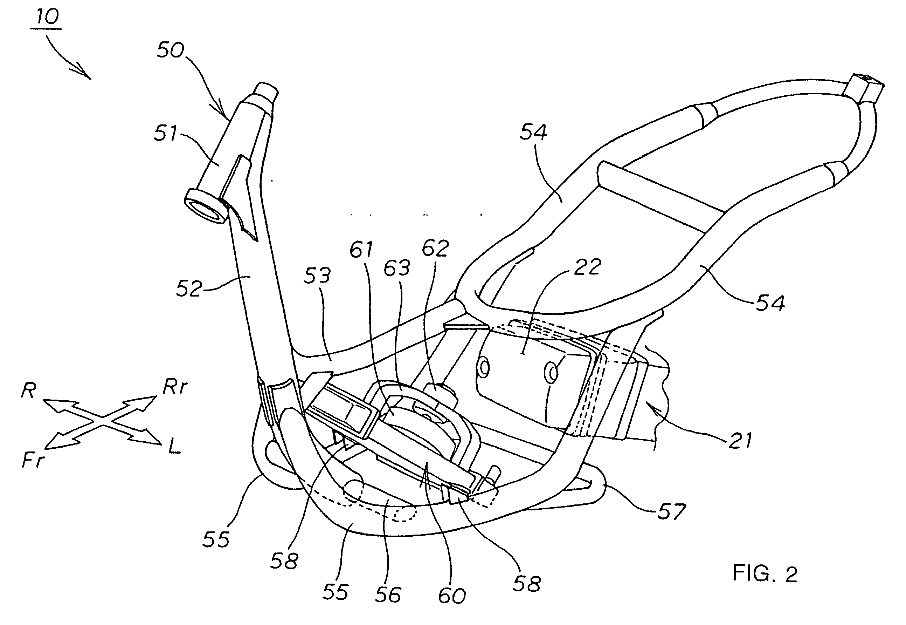

Fig. 2 is a perspective view of the body frame according to the present invention.

A body frame 50 is a cradle type body frame in which a down tube 52 is lowered from a head pipe 51, a horizontal tube (a center tube) 53 is extended backward from the middle of the down tube 52, a pair of rear pipes 54, 54 are extended from the rear end of the horizontal tube 53, whereas a pair of left and right under pipes 55, 55 are extended downward from the middle of the down tube 52, the lower ends of the under pipes 55, 55 are extended backward, and the rear ends thereof are extended upward and joined to the left and right rear pipes 54, 54.

Further, in the body frame 50, a front cross member 56 and a rear cross member 57 are extended over between the front parts and rear parts, respectively, of the left and right under pipes 55, 55, the lower end of the down tube being joined to the front cross member 56.

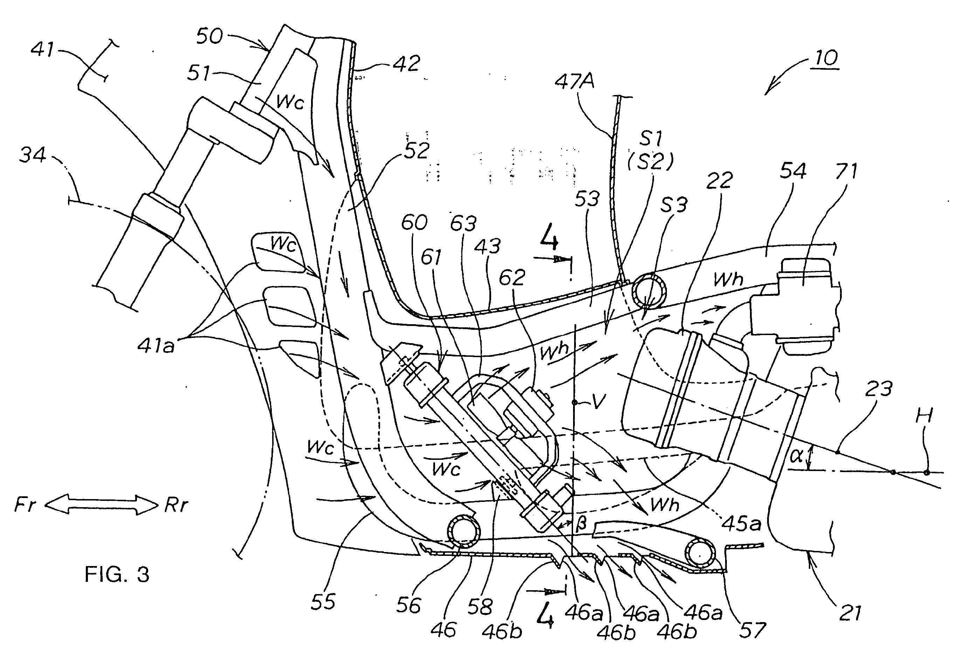

Fig. 3 is a side sectional view of the front part of the body frame, the engine, and the surroundings of the tunnel cover according to the present invention, showing that the horizontal tube 53 is covered by the tunnel cover 43 front and rear parts of which are opened.

The engine 21 is a water cooling type engine in which the cylinder head 22 is arranged to be directed at the forward of the body. More specifically, the engine 21 is a forwardly inclined type engine in which the cylinder shaft 23 is inclined at an angle of α (for example, approximately 15° ) with respect to the horizontal line H, and the cylinder head 22 is raised.

In the two-wheeled vehicle 10, a radiator for an engine 60 is arranged between the cylinder head 22 of the engine 21 and the down tube 52 and in a space S1 surrounded by the tunnel cover 43. More specifically, the radiator 60 and the engine 21 are arranged in said order within the tunnel cover 43.

That is, in the two-wheeled vehicle 10, the horizontal tube 53 indispensable to enhance the rigidity of the body frame 50 is covered by the tunnel cover 43 to improve the external appearance. Making effectively using the tunnel cover 43 as described, the radiator 60 is arranged inside in a state of being forwardly inclined.

Since the radiator 60 is arranged near the engine 21, a split type hose for cooling water need not be used, the volume productivity of the hose is enhanced, and temperature monitoring of the engine 20 side is easy.

Further, since the radiator 60 is covered by the tunnel cover 43, the external design exclusively for the radiator need not be provided despite the two-wheeled vehicle 10 provided with the radiator 60, and there can be provided an external appearance of a two-wheeled vehicle as if an air cooling engine is mounted.

According to the feature of the present invention, when the two-wheeled vehicle 10 is viewed from the side, the radiator 60 is forwardly inclined with the upper part projected forwardly, and is inclined at a predetermined angle β (for example, approximately 45° ) with respect to a vertical line V. Since the radiator 60 is arranged in a state of being forwardly inclined within the tunnel cover 43, the height dimension of the radiator 60 can be reduced when the two-wheeled vehicle 10 is viewed from the side. Accordingly, a large radiator 60 can be arranged in a limited space S1 within the tunnel cover 43. As a result, a cooling area of the radiator 60 can be made large to improve the cooling ability.

Reference numeral 61 designates a cooling fan; 62 a motor for a fan; and 63 a motor support part.

The under cover 46 is bored with a plurality of exhaust holes 46a in a lateral direction of the body, and air in the space S1 (including a closed space described later) can be discharged downward of the body from the exhaust holes 46a. Further, the under cover 46 is provided with a number or louvers 46b directed obliquely of the edges of the plurality of.exhaust holes 46a. The louvers 46b are straightening plates for straightening a flow of air.

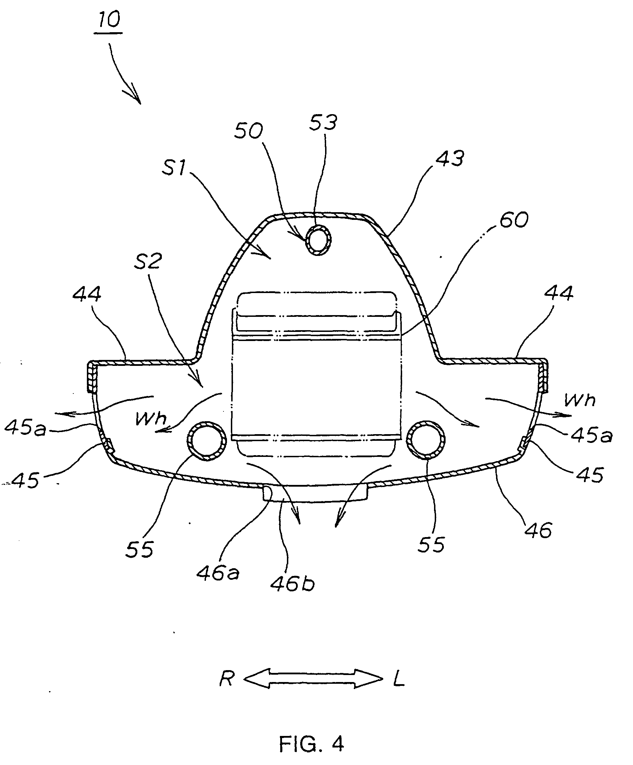

Fig. 4 is a sectional view taken on line 4-4 of Fig. 3, showing that the horizontal tube 53 is covered by the tunnel cover 43, and the radiator 60 is arranged within the tunnel cover 43.

More specifically, the tunnel cover 43 is a cover member having a substantially inversed-U letter section for covering the horizontal tube 53, in which left and right step floors 44, 44 are formed integral with left and right open ends. The step floors 44, 44 are members in which feet of a driver are put.

A closed space S2 formed by covering the body frame 50 by the tunnel cover 43, the left and right floor skirts 45, 45 and the under cover 46 serves as a cooling air passage for moving cooling air introduced from the forward of the vehicle backward. The radiator 60 is arranged in the closed space S2 as described above.

Since the closed space S2 serves as a cooling air passage, a cooling air passage formed from a separate member need not be provided. Therefore, since the cooling air passage can be widened, cooling air can be flown efficiently to enhance the cooling efficiency of the radiator 60. Further, since the cooling air passage formed from a separate member is unnecessary, the cooling air passage may comprise a simple construction, and the number of parts can be reduced.

As will be apparent from the foregoing, the closed space S2 includes the space S1 covered by the tunnel cover 43. The left and right floor skirts 45, 45 are bored with the waste air holes 45a, 45a, from which air in the closed space S2 can be discharged sideways of the vehicle.

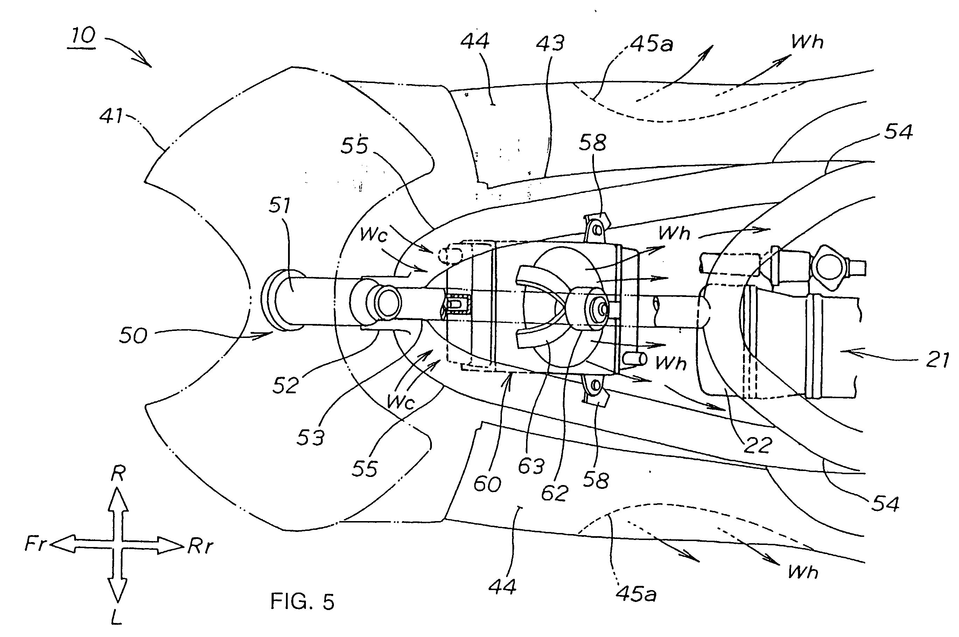

Fig. 5 is a plan sectional view of the front part of the body frame, the engine, the tunnel cover, and the surroundings of the radiator according to the present invention, showing a plane arranging relationship of the engine 21, the tunnel cover 43 and the radiator 60 with respect to the body frame 50. Reference numerals 58, 58 designate radiator mounting brackets.

A function of the radiator arranging construction for a two-wheeled vehicle constituted as described above will be explained with reference to Fig. 3.

When:the cooling fan 61 is actuated for suction or the two-wheeled vehicle 10 is traveled forward, outside air enters as cooling air (including travel air when the vehicle travels) Wc from the front opening of the tunnel cover 43, passes through the closed space S2 (including the: space S1) and flows into the radiator 60. Cooling waste air Wh after being heat exchanged with engine cooling water passing through the radiator 60 passes through the closed space S2 (including the space S1) and flows backward of the vehicle. Further, a part of the cooling waste air Wh passes through the waste air hole 45a and the waste air holes 46a and flows out to the outside of the vehicle.

Since the engine 21 arranged at the rear of the radiator 60 is of the forwardly inclined type engine, a clearance between the upper end of the cylinder head 22 and the tunnel cover 43 is small. On the other hand, since the radiator 60 is arranged to be inclined forward, the cooling waste air Wh after having passed through the radiator 60 moves rearward and upward, and further flows backward along the tunnel cover 43. Because of this, cooling waste air Wh flowing toward the rear part of the vehicle from the radiator 60 can secure a good flow despite a small clearance S3. Accordingly, accessories for the engine such as a carburetor 71 or the like arranged at the rear of the vehicle can be cooled efficiently, and the upper end of the cylinder head 22 can be also cooled preferably.

It is noted that in the above-described embodiment of the present invention, the two-wheeled vehicle 10 is not limited to a scooter type two-wheeled vehicle.

Further, the body frame 50 may be of a constitution that the horizontal tube 53 is extended backward from the lower end of the down tube 52.

Furthermore, the body frame 50 may be of a constitution that a separate member from the down tube 52 is lowered from the head pipe 51, and the horizontal tube 53 is extended backward from the middle of the separate member. In this case, the separate member is also included in the down tube 52.

This refers to a two-wheeled vehicle, to easily enhance the cooling ability of a radiator arranged in a limited space within a tunnel cover, and to cool more efficiently accessories for the engine by cooling waste air after having passed through the radiator.

To achieve this, in a body frame 50 a down tube 52 is lowered from a head pipe 51, and a horizontal tube 53 is extended rearward from the middle of the down tube 52. The horizontal tube 53 is covered by a tunnel cover 43 having a substantially inversed-U letter section and front and rear parts of which are opened, and a radiator 60 and an engine 21 are arranged within the tunnel cover 43 in said order. When the two-wheeled-vehicle 10 is viewed from the side, the radiator 60 is inclined at a predetermined angle with respect to a vertical line V.

## Claims

1. Radiator arranging construction in a two-wheeled vehicle in which a down tube (52) is lowered from a head pipe (51), a horizontal tube (53) is covered by a tunnel cover (43) having a substantially inversed-U letter section and front and rear of which are opened, and a radiator (60) and an engine (21) are arranged in the tunnel cover (43) in said order, wherein said radiator (60) is inclined at a predetermined angle (β) to a vertical line (V) when said two-wheeled vehicle (10) is viewed from the side thereof, and is positioned under said horizontal tube (53), such that a part of the air leaving the radiator (60) is directly fed into a clearance (S3) between the upper side of the engine (21) and the tunnel cover (43), **characterized in that** said radiator (60) is arranged behind the position where the horizontal tube (53) extends backwards from the middle of the down tube (52) and within a part of the tunnel cover (43) having the substantially inversed-U letter section and extending along the horizontal tube (53).

2. The radiator arranging construction according to claim 1,
wherein a pair of left and right under pipes (55, 55) are extended downward from the middle of the down tube (52) and then backward below the horizontal tube (53), wherein the radiator (60) is arranged between the horizontal tube (53) and the backward-extending portions of the under pipes (55, 55).

3. The radiator arranging construction according to claim 2,
wherein the radiator (60) is fixed to the backward-extending portions of the under pipes (55, 55) by brackets (58).

## Patentansprüche

1. Kühleranordnungskonstruktion in einem zweirädrigen Fahrzeug, worin ein Abwärtsrohr (52) von einem Kopfrohr (51) nach unten geht, ein horizontales Rohr (53) mit einer Tunnelabdeckung (43) abgedeckt ist, die einen angenähert umgekehrt U-förmigen Querschnitt hat und deren Vorder- und Rückseite offen sind, und ein Kühler (60) und ein Motor (21) in der Tunnelabdeckung (43) in dieser Reihenfolge angeordnet sind, worin der Kühler (60) mit einem vorbestimmten Winkel (β) zur vertikalen Linie (V) geneigt ist, wenn man das zweirädrige Fahrzeug (10) von der Seite her betrachtet, und unter dem horizontalen Rohr (53) angeordnet ist, derart, dass ein Teil der den Kühler (60) verlassenden Luft direkt in einen Zwischenraum (S3) zwischen der Oberseite des Motors (21) und der Tunnelabdeckung (43) geleitet wird,
**dadurch gekennzeichnet, dass** der Kühler (60) hinter der Position, wo sich das horizontale Rohr (53) von der Mitte des Abwärtsrohrs (52) nach hinten erstreckt, und innerhalb eines Teils der Tunnelabdeckung (43), der den angenähert umgekehrt U-förmigen Querschnitt hat und sich entlang dem horizontalen Rohr (53) erstreckt, angeordnet ist.

2. Kühleranordnungskonstruktion nach Anspruch 1, worin ein Paar linker und rechter unterer Rohre (55, 55) sich von der Mitte des Abwärtsrohrs (52) nach unten und dann unter dem horizontalen Rohr (53) nach hinten erstreckt, worin der Kühler (60) zwischen dem horizontalen Rohr (53) und den sich nach hinten erstreckenden Abschnitten der unteren Rohre (55, 55) angeordnet ist.

3. Kühleranordnungskonstruktion nach Anspruch 2, worin der Kühler (60) an den sich nach hinten erstreckenden Abschnitten der unteren Rohre (55, 55) durch Beschläge (58) befestigt ist.

## Revendications

1. Construction permettant d'agencer un radiateur dans un véhicule à deux roues dans laquelle un tube diagonal (52) est abaissé par rapport à une tubulure de refoulement (51), un tube horizontal (53) est recouvert par une console (43) ayant une section sensiblement en lettre U inversée et dont l'avant et l'arrière sont ouverts, et un radiateur (60) et un moteur (21) sont agencés dans la console (43) dans ledit ordre, dans laquelle ledit radiateur (60) est incliné selon un angle prédéterminé (β) par rapport à une ligne verticale (V) lorsque ledit véhicule à deux roues (10) est observé latéralement, et est positionné sous ledit tube horizontal (53), de sorte qu'une partie de l'air sortant du radiateur (60) est directement alimentée dans un jeu (S3) situé entre le côté supérieur du moteur (21) et la console (43), **caractérisée en ce que** ledit radiateur (60) est agencé derrière la position dans laquelle le tube horizontal (53) s'étend vers l'arrière à partir du centre du tube diagonal (52) et dans une partie de la console (43) ayant la section sensiblement en lettre U inversée et s'étendant le long du tube horizontal (53).

2. Construction permettant d'agencer un radiateur selon la revendication 1, dans laquelle une paire de sous tuyaux gauche et droit (55, 55) est étendue vers le bas à partir du centre du tube diagonal (52) et ensuite vers l'arrière au dessous du tube horizontal (53), dans laquelle le radiateur (60) est agencé entre le tube horizontal (53) et les parties s'étendant vers l'arrière des sous tuyaux (55, 55).

3. Construction permettant d'agencer un radiateur selon la revendication 2, dans laquelle le radiateur (60) est fixé sur les parties s'étendant vers l'arrière des sous tuyaux (55, 55) par des supports (58).
